(19) Europäisches Patentamt
European Patent Office
Office européen des brevets

(11) Veröffentlichungsnummer: **0 124 741**
**B1**

# (12) EUROPÄISCHE PATENTSCHRIFT

(45) Veröffentlichungstag der Patentschrift: **28.01.87**

(51) Int. Cl.⁴: **C 08 G 69/44,** C 08 G 81/00

(21) Anmeldenummer: **84103300.4**

(22) Anmeldetag: **26.03.84**

(54) **Verfahren zur Herstellung von Polyesterpolyamidblockpolymeren.**

(30) Priorität: **08.04.83 DE 3312580**

(43) Veröffentlichungstag der Anmeldung: **14.11.84 Patentblatt 84/46**

(45) Bekanntmachung des Hinweises auf die Patenterteilung: **28.01.87 Patentblatt 87/5**

(84) Benannte Vertragsstaaten: **DE FR GB IT**

(56) Entgegenhaltungen:
**EP - A - 0 084 643**
**DE - A - 2 442 391**
**DE - A - 2 728 319**
**GB - A - 1 140 463**
**US - A - 3 849 514**
**US - A - 3 907 733**

(73) Patentinhaber: **BAYER AG, Konzernverwaltung RP Patentabteilung, D-5090 Leverkusen 1 Bayerwerk (DE)**

(72) Erfinder: **Müssig, Bernhard, Dr., Eddelsener Weg 31, D-2105 Seevetal 1 (DE)**
Erfinder: **Meyer, Rolf-Volker, Dr., Buchheimer Strasse 23, D-4150 Krefeld (DE)**
Erfinder: **Dhein, Rolf, Dr., Deswatinesstrasse 30, D-4150 Krefeld (DE)**
Erfinder: **Brassat, Bert, Dr., Bethelstrasse 24, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 124 741 B1

ACTORUM AG

**Beschreibung**

Die vorliegende Erfindung betrifft Verfahren zur Herstellung von Polyester-Polyamidblockpolymeren, die eine hohe Wärmeformbeständigkeit, gute Verarbeitbarkeit und eine hohe Schlagzähigkeit aufweisen, indem man die polyamidbildende Ausgangsmischung bis zu einer bestimmten Mindestviskosität vorpolymerisiert, mit den Polyestern mischt und zu Ende polykondensiert.

Für viele Gebiete der Technik sind zähe, flexible, temperatur- und chemikalienbeständige Polymere von grossem Interesse. Solche Kunststoffe wie Copolyamide, werden z.B. bei der Herstellung von Förderbändern, für Scharniere und für bei Schlagbeanspruchung nachgebende, unzerbrechliche Halterungen und Befestigungen eingesetzt.

Um die Elastizität von Polyamiden zu verbessern, hat man schon versucht, in diese Polyetherblöcke einzubauen (DOS 2712897).

Für manche Einsatzgebiete sind aber solche Blockpolymere nicht geeignet, da sie nur eine begrenzte Beständigkeit gegen den Einfluss von Wärme, Licht und Bewitterung aufweisen.

Bei den bisherigen Versuchen, Polyester in Polyamide einzubauen, indem man den Polyester in Gegenwart von Polyamid polykondensiert, erhielt man nur spröde oder klebrige Massen, die als Konstruktionswerkstoffe völlig ungeeignet sind. Werden bei den Polykondensationen Umesterungskatalysatoren und niedrigsiedende Diole im Überschuss verwendet und die flüchtigen Verbindungen in einer Vakuumstufe entfernt, so erhält man elastische Feststoffe mit grossen Erweichungsbereichen, die zur Herstellung von Fasern geeignet sind (DOS 1620899). Wegen ihrer schlechten Erstarrung können daraus keine Formkörper durch thermoplastisches Verformen hergestellt werden.

Ziel der vorliegenden Erfindung war es daher, modifizierte Polyamide bereitzustellen, die sich durch thermoplastisches Verformen, insbesondere durch Extrusion und Spritzgiessen zu Formkörpern mit hohen Erweichungstemperaturen, Steifigkeit und Schlagzähigkeit verarbeiten lassen.

Gegenstand der Erfindung sind daher Verfahren zur Herstellung von thermoplastisch verarbeitbaren Polyamidpolyesterblockpolymeren, indem man die polyamidbildenden Komponenten in bekannter Weise bis zu einer relat. Viskosität von mindestens 1,2 (gemessen an einer 1% Polymerlösung in m-Kresol bei 25°C), vorzugsweise 1,8-2,2 vorpolymerisiert, 1-30 Gew.-% vorzugsweise 5-20 Gew.-%, bezogen auf die Gesamtmischung, eines Polyesters mit einem Molekulargewicht Mn von 2000-20000, vorzugsweise 3500-15000 zugibt, dessen Dicarbonsäureeinheiten sich zumindest zu 50 Gew.-%, vorzugsweise 80-100 Gew.-%, von wenigstens einer gegebenenfalls ungesättigten aliphatischen oder cycloaliphatischen Dicarbonsäure mit wenigstens 17 C-Atomen ableiten, und die Polykondensation in üblicher Weise bei Temperaturen von 250-270°C zu Ende führt.

Die Polymerisation oder Polykondensation der polyamidbildenden Komponenten erfolgt nach üblicher bekannter Methode, indem man vorzugsweise die wässrigen Salzlösungen und/oder die ω-Aminocarbonsäure bzw. die entsprechenden Lactame hydrolytisch polymerisiert.

Als Polyamid-bildende Komponenten geeignet sind aliphatische, araliphatische und cycloaliphatische Diamine mit $C_2$-$C_{20}$, vorzugsweise Alkylendiamine, wie Tetramethylendiamin, Hexamethylendiamin, Octamethylendiamin, Decamethylendiamin, Dodecamethylendiamin. Besonders geeignet ist Hexamethylendiamin. Auch alkylsubstituierte Alkylendiamine wie Methyl-, Dimethyl- und Trimethyl-Hexamethylendiamin sind verwendbar. Araliphatische Diamine wie z.B. m-Xylylen- und p-Xylylendiamin und deren alkylsubstituierte Analoga sind ebenfalls geeignet.

Als cycloaliphatische Diamine sind Isophorondiamin, Diaminocyclohexane sowie Diamine der Formel I

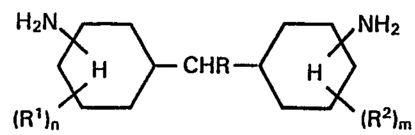

(I)

geeignet,

wobei R=H, $C_1$-$C_{18}$-Alkyl und $R^1$, $R^2$ unabhängig voneinander H oder $C_{1-18}$-Alkyl, n und m unabhängig voneinander eine ganze Zahl 1-4 bedeuten können.

Geeignete Polyamid-bildende Dicarbonsäuren sind aromat. und aliphatische gesättigte Dicarbonsäure mit $C_5$-$C_{16}$.

Besonders geeignet sind die Alkylendicarbonsäuren wie
Glutar-, Adipin-, Pimelin-, Suberin-, Azelain-, Sebacin-, Undecandicarbon-, Decandicarbon-, 2-Methyladipin-(2-Methylhexan-1,6-dicarbonsäure), 3-Methyl-adipin- und 3,4-Dimethyl-adipinsäure.

Als aromatische Dicarbonsäuren sind z.B. 3,5--Pyridin-dicarbonsäure, 2,6-Naphthalin-, 4,4'-Diphenyl-, 4,4'-Diphenylsulfon-, Benzophenon-dicarbonsäure, Terephthalsäure, substituierte Terephthalsäuren und Isophthalsäure, geeignet. Auch cycloaliphatische Dicarbonsäuren, wie z.B. Cyclohexan-1,4-dicarbonsäure (Hexahydroterephthalsäure), Cyclohexan-diessigsäure sind verwendbar. Bevorzugt wird Adipinsäure eingesetzt.

Geeignete ω-Aminocarbonsäuren sind die aliphatischen Aminocarbonsäuren mit $C_5$-$C_{13}$ sowie die entsprechenden cyclischen Lactame.

Besonders geeignet sind die ω-Aminocarbonsäuren bzw. deren Lactame, bei denen die Alkylengruppe jeweils aus einer Kette unsubstituierter Methylengruppen oder aus einer Kette von Methylengruppen, wobei eins der Wasserstoffatome von einer oder mehreren der Methylengruppe durch eine Methylgruppe ersetzt ist, besteht.

Beispiele für solche Aminocarbonsäuren bzw. Lactame sind folgende: 6-Aminocapronsäure, 11-Amino-undecansäure, 3-, 4-, 5- oder 6-Methyl-6-aminocapronsäure, Caprolactam, Dodecanolactam und 3-, 4-, 5- oder 6-Methylcaprolactam. ε-Caprolactam ist bevorzugt.

Auch Mischungen der genannten polyamidbildenden Komponenten sind geeignet.

Die Polyamidblöcke der erfindungsgemäss hergestellten Blockpolymere bestehen vorzugsweise aus Polyhexamethylenadipamid, Polyhexamethylensebacamid, Dodecamethylenterephthalamid, Polycaprolactam, Polyamid 11, Polyamid 12, Polyhexamethylenisophthalamid, Polyhexamethylendodecanamid oder Polytrimethylhexamethylen-terephthalamid. Besonders bevorzugt sind Polyamid-6 und Polyamid-6,6-blöcke.

Die erfindungsgemäss eingesetzten Polyester zeichnen sich dadurch aus, dass ihre Dicarbonsäurekomponente zumindest zu 50 Gew.-%, vorzugsweise zu 80-100 Gew.-%, aus einer gegebenenfalls ungesättigten aliphatischen oder cycloaliphatischen Dicarbonsäure mit mindestens 17 C-Atomen besteht. Derartige Dicarbonsäuren sind vorzugsweise Umsetzungsprodukte von ungesättigten Fettsäuren mit z.B. einer weiteren Fettsäure oder einem entsprechenden Fettsäureester, mit CO oder kurzkettigen α,β-ungesättigten Monocarbonsäuren, wobei neben den dabei entstehenden sogenannten Dimersäuren und deren Ester die Hydrierungsprodukte besonders bevorzugt sind.

Als Umsetzungsprodukte ungesättigter Fettsäuren mit CO eignen sich vorzugsweise solche der allgemeinen Formel (II)

$CH_3$-$(CH_2)_x$-CH-$(CH_2)_y$-COOH (II)
|
COOH

mit x und y unabhängig voneinander eine ganze Zahl von 1-15 und x+y zusammen 16,
welche z.B. in DOS 2424138 oder bei Reppe und Kroper, Ann. Chem. 582, 62 (1953) beschrieben sind.

Weiter eignen sich Dimerisierungsprodukte aus ungesättigten Fettsäuren und α,β-ungesättigten, kurzkettigen Monocarbonsäuren, vorzugsweise der Acrylsäure bzw. Methacrylsäure, der allgemeinen Formel III

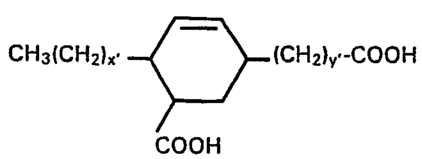
(III)

mit x' eine ganze Zahl von 1-5 und
y' eine ganze Zahl von 1-7
und besonders die entsprechenden hydrierten Produkte.

Dimersäuren, die durch Dimerisierung von Fettsäuren und/oder deren Ester entstehen und deren Hydrierungsprodukte eignen sich besonders. Solche Verbindungen sind beschrieben z.B. bei J.C. Cowan und H.M. Teeter, Ind. Eng. Chem. 36, 148-152 (1944), L.F. Byrne, Reviewed Chem. Industries, S. 457-458, 4-15.61, Dudley T. Moore, Paint, Oil and Chemical Review, 4.1.1951, Henry Fleming Payne, Organic Coating Technology, 1, 275-277 (1954), R.G. Kadesch, J. Amer. Oil Chemists Assoc. 31, 568-573 (1954), H.A. Wittcoff u. B.G. Reuben in Industrial Organic Chemicals in Perspective, Bd. I, S. 139 (Wiley Interscience, N.Y. 1980), Condensation Monomers, Herausg. J.K. Stille und T.W. Campbell, (Wiley-Interscience, N.Y.) in den Abschnitten «Dimer Acid» und «$C_{19}$ Dicarboxylic Acids» beschrieben. Zu diesen Dimersäuren zählen auch die handelsüblichen aus Naturstoffen oder synthetischen Harzen gewonnenen wie z.B. Dicarbonsäuren mit $C_{19}$-$C_{23}$ wie sie von R.G. Kadesch, J. Amer. Oil Chemists' Soc. 31, 568 (1954) beschrieben und aus Japanwachs abgetrennt werden; aber auch Oxidationsprodukte von Paraffinen, die als Handelsprodukt neben Hexadecan- oder Octadecandicarbonsäuren noch weitere Dimersäuren wie

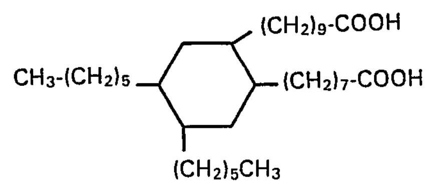

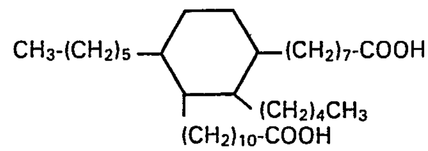

$CH_3$-$(CH_2)_9$-CH-$(CH_2)_6$-COOH
|
$CH_3$-$(CH_2)_9$-CH-$(CH_2)_6$-COOH

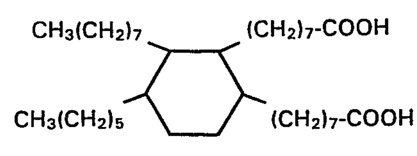

oder deren Gemische enthalten können.

Die Produkte, die aus Naturstoffen stammen, können schwankende Zusammensetzung haben. Weiterhin enthalten diese Produkte einen gewissen Anteil an Mono- und Tricarbonsäuren, wobei bei den erfindungsgemäss zu verwendenden der Dicarbonsäureanteil über 80, besonders bevorzugt über 95 Gew.-% liegen soll.

Besonders bevorzugt werden hydrierte dimerisierte Fettsäuren eingesetzt.

Zum Aufbau der Polyester werden die üblichen Polyole und gegebenenfalls übliche gesättigte, aliphatische oder aromatische Dicarbonsäuren mit verwendet.

Geeignete Polyole, vorzugsweise Diole sind Alkylen- oder Cycloalkylenglykole, deren Alkylen- bzw. Cycloalkylengruppe vorzugsweise 2-18 C-Atome enthält. Als Beispiele für solche Glykole seien genannt: Ethylenglykol, 1,2- und 1,3-Propandiol, 1,4-Butandiol, Neopentylglykol, 1,5-Pentandiol, 1,6-Hexandiol, 1,10-Decandiol, 1,4-Di(methyl-ol)-cyclohexan, TCD-Dimethanol und langkettige Diole wie z.B. technischer 12-Hydroxystearylalkohol. In besonderen Fällen können auch ethergruppenhaltige Glykole verwendet werden. Dazu gehören Diethylenglykol, Triethylenglykol und Polyetherdiole, wie sie bereits für die Herstellung von Polyurethanschäumen verwendet werden. Diese Polyetherdiole enthalten als Bausteine z.B. $-O-(CH_2)_n$ mit $n = 1-5$ und/oder $-O-CH_2-CHR_3-$ mit $R_3 = C_1-C_{18}$-Alkyl. Auch die Verwendung von Polyesterdiolen als Glykolkomponente ist möglich. Es können auch Gemische der genannten Diole eingesetzt werden.

Als weitere mitzuverwendende Dicarbonsäuren eignen sich aromatische und aliphatische Dicarbonsäuren, vorzugsweise der allgemeinen Formel IV

$$HO_2C-R_4-CO_2H \qquad (IV),$$

in der

$R_4$ einen (Cyclo)Alkylenrest mit 5 bis 14 C-Atomen oder einen aromatischen Rest mit $C_6$-$C_{18}$ bedeutet.

Besonders geeignet sind gegebenenfalls mit $CH_3$-Gruppen substituierte Alkylendicarbonsäuren, wie Glutar-, Adipin-, Pimelin-, Suberin-, Azelain-, Sebacin-, Undecandicarbon-, Decandicarbon-, 2-Methyladipin-(2-Methylhexan-1,6-dicarbonsäure), 3-Methyl-adipin- und 3,4-Dimethyl-adipinsäure.

Als aromatische Dicarbonsäuren sind z.B. 3,5-Pyridindicarbonsäure, 2,6-Naphthalin-, 4,4'-Diphenyl-, 4,4'-Diphenylsulfon-, Benzophenon-dicarbonsäure, Terephthalsäure, substituierte Terephthalsäuren und Isophthalsäure, geeignet. Auch cycloaliphatische Dicarbonsäuren, wie z.B. Cyclohexan-1,4-dicarbonsäure (Hexahydroterephthalsäure), Cyclohexan-diessigsäure können eingesetzt werden.

Die verwendeten Polyester sollen unverzweigt sein und OH- und/oder COOH-Endgruppen aufweisen. Durch Kettenabbrecher (z.B. monofunktionelle Säuren oder Alkohole) oder verzweigte Verbindungen (z.B. Trimethylolpropan, Trimesinsäure) können die Art und Zahl der Kettenenden gesteuert werden. Bevorzugt sind Polyester mit Carboxylendgruppen. Sämtliche für die Polyester-Herstellung verwendeten Säuren können auch als Polyester-bildende Derivate wie z.B. als Methyl- oder Ethylester eingesetzt werden.

Die Herstellung der Polyester erfolgt nach den üblichen Verfahren, vorzugsweise durch direkte Veresterung ohne Schleppmittel. Während der Veresterung und/oder Umesterung kann ein inertes Gas, z.B. Stickstoff, durch die Apparatur geleitet werden. Die Verwendung von Katalysatoren ist nicht notwendig. Das Molekulargewicht Mn der erhaltenen Polyester sollte mindestens 2000 sein, wobei aber die Verarbeitbarkeit wie Zugabe zum Polyamidvorkondensat noch gewährleistet sein muss. Die Säurezahl sollte unter 30 liegen. Das Molekulargewicht der Esterkomponente liegt zwischen 2000 und 20000, bevorzugt zwischen 2500 und 15000 und insbesondere bei ca. 10000 liegen. Das mittlere Molgewicht ist durch Endgruppenanalyse bestimmt.

Die erfindungsgemässe Herstellung der Polyester-Polyamide erfolgt in Autoklaven oder in VK-Rohren. Die Kondensationstemperaturen sollen zwischen 190 und 270°C, vorzugsweise zwischen 230 und 270°C liegen.

Das erfindungsgemässe Verfahren wird so durchgeführt, dass die Polyamid-bildenden Komponenten vorgelegt und in bekannter Weise bis zu einer rel. Viskosität von mindestens 1,2 vorkondensiert werden. Nach Zugabe der Polyesterkomponente wird in üblicher Weise bei 250-270°C zu Ende kondensiert. Die so erhaltenen Polyesterpolyamidblockpolymeren können in üblicher Weise ausgetragen, abgesponnen und granuliert werden, wobei eine Monomerextraktion angebracht sein kann.

Die erfindungsgemäss hergestellten Polyester-Polyamide weisen, jeweils im Verhältnis zur relativen Viskosität, überraschend hohe Zähigkeiten (Kälte- und Kerbschlagzähigkeit) auf. Darüber hinaus ist die Wasseraufnahme in der Regel geringer als bei den unmodifizierten Polyamiden.

Die Polyester-Polyamide lassen sich problemlos zu Spritzgussteilen, Schläuchen, Profilen, Folien oder Monofilen von jeweils opaleszentem bis transparentem Aussehen verarbeiten. Die ausgezeichnete Extrudierbarkeit ermöglicht ferner eine problemlose Einarbeitung von Zusatz- und Hilfsstoffen, wie z.B. Stabilisatoren, Verarbeitungshilfsstoffen, Pigmenten, Füllstoffen, Glasfasern, Antiflammzusätzen, Nucleierungsmitteln, Asbest, Molybdänsulfiden, Graphit, Mikroglaskugeln, Weichmachern, Antistatika, Härtern, Gleitmitteln, Trennmitteln oder Treibmitteln. Die erfindungsgemässen Polyester-Polyamide eignen sich auch als Legierungspartner für andere Polymere wie z.B. Polyamide oder Polyalkylenterephthalate.

## I. *Herstellung der Polyester*

### *Beispiel A*

In einem 6-l-Kolben mit absteigendem Kühler werden 3340 g (5,95 Mol*) Dimerfettsäure, die durch Oligomerisierung von Tallölfettsäure und anschliessender Hydrierung und destillativer Fraktionierung erhalten wurde und aus ~ 95% Dimerfettsäure ($C_{36}$), ~ 4% Trimerfettsäure ($C_{54}$) und ~ 1% Monofettsäure ($C_{18}$) besteht (Hystrene 3695® ) und 660 g (5,59 Mol) Hexandiol-(1,6) unter Stickstoff und unter Rühren 2 h bei 150°C kondensiert, dabei destilliert Wasser ab. Danach wird bei 195-200°C bis zum Erreichen der Säurezahl 11 weiter gerührt.

Das Produkt ist ein helles, mittelviskoses Öl, Säurezahl 10,7, OH-Zahl < 1, Glastemperatur —58°C (Differentialthermoanalyse), Molekulargewicht $M_n = 10\,500$ (Endgruppenbestimmung).

### *Beispiel B*

437 g (1,25 Mol*) eines technischen 12-Hydroxystearylalkohol und 928 g (1,66 Mol*) Dimerfettsäure nach Beispiel A werden wie in Beispiel A zu einem Polyester kondensiert. Das Produkt ist ein hellgelbes, viskoses Harz, Säurezahl 9, OH-Zahl 18, Glastemperatur —105°C (Differentialthermoanalyse), Molekulargewicht $M_n = 4100$ (Endgruppenbestimmung).

*Beispiel C*

2390 g (4,26 Mol*) einer Dimerfettsäure (einem in Beispiel A entsprechenden Fettsäuregemisch = Empol 1010® ) und 778 g (3,97 Mol) TCD-Alkohol mit der idealisierten Formel

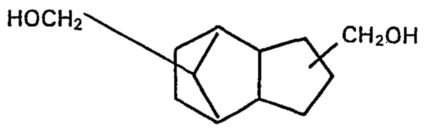

werden wie bei Beispiel A zu einem Polyester kondensiert. Das Produkt ist ein hellgelbes, hochviskoses Harz, Säurezahl 11, OH-Zahl 30, Glastemperatur —36°C (Differentialthermoanalyse), Molekulargewicht $M_n$ 8800 (Gelpermeationschromatographie «CrPC»).

*) Molekulargewicht aus Säurezahl bzw. OH-Zahl bestimmt.

II. *Herstellung der Polyester-Polyamide*

*Beispiel 1*

9 kg Caprolactam und 400 g Wasser werden 1 h bei 200°C und dann 3 h bei 270°C unter Eigendruck in einem 20-l-Autoklav mit 20 upm gerührt und bis zu einer rel. Viskosität von 1,5 vorkondensiert. Im Verlauf einer halben Stunde wird der Überdruck abgelassen, danach Stickstoff übergeleitet und 1 kg des Polyesterharzes nach Beispiel A zugegeben. Nach 7 h Kondensation bei 270°C lässt man das Produkt unter Stickstoff 1 h absitzen, danach wird abgesponnen, granuliert und 3 × mit 20 kg Wasser, das 20 g Hydrazinhydrat enthält, bei 95-100°C extrahiert. Die Eigenschaften der getrockneten Produkte sind in Tabelle 1 aufgeführt.

*Beispiel 2 und 3*

Die Polyester-Polyamide werden wie in Beispiel 1 hergestellt, jedoch werden die Polyesterharze nach Beispiel B bzw. C eingesetzt. Tabelle 1 zeigt die Eigenschaften der Produkte.

*Tabelle 1*

| Beispiel | 1 | 2 | 3 |
|---|---|---|---|
| Polyester | A | B | C |
| Fliessl. (cm**) | 52 | 47 | 100 |
| Biegefestigk. (mPa) | | | |
| (DIN 53452) | 93,3 | 89,0 | 89,5 |
| Kerbschlagz. (kJ/m²) | | | |
| (DIN 53453) | 9,2 | 13,0 | 5,5 |
| Kerbschlagzähigkeit | | | |
| bei —20°C (kJ/m²) | 1,8 | 6,2 | 3,1 |
| bei —40°C | 1,3 | 2,1 | 1,6 |
| Vicat B (°C) | | | |
| (DIN 53460) | 177 | 172 | 180 |
| Wasseraufn. (%) | | | |
| 24 h bei 60°C | 4,32 | 4,60 | 3,55 |
| rel. Visk. | 2,89 | 3,21 | 1,92 |

**) Die Fliesslänge ist ein Mass für die Fliessfähigkeit eines Produktes und damit für seine Verarbeitbarkeit; höhere Fliesslänge bedeutet bessere Fliessfähigkeit und damit kürzere Spritzcyclen.

Die Fliesslänge wurde wie folgt bestimmt. In ein spezielles Werkzeug, das auf 90°C gehalten wird, wird mittels einer Spritzgiessmaschine, deren Zylindertemperatur 260°C beträgt, die zu untersuchende Probe mit einem Spritzdruck von 72 bar eingespritzt. Besonders leichtfliessende Werkstoffe sind in der Lage, unter diesen Bedingungen das Werkzeug zu füllen, so dass man nachher eine 100 cm lange Spirale entnehmen kann. Weniger fliessfähige Werkstoffe füllen unter den beschriebenen Bedingungen das Werkzeug nur teilweise; dann können infolge der vorzeitigen Erstarrung der Schmelze nur Spiralkörper von < 100 cm Länge erhalten werden.

Als Fliesslänge wird die Länge in cm angegeben, die 5 mal reproduziert wurde.

*Vergleichsversuch 1*

9 kg Caprolactam und 0,4 kg Wasser werden wie in Bsp. 1 kondensiert, jedoch ohne dass ein Polyester zugegeben wird. Tab. 2 zeigt die Eigenschaften des Produkts.

*Beispiel 4 und 5*

Die Polyester-Polyamide werden wie in Beispiel 1 hergestellt. Der Gehalt an Polyester A beträgt 6 bzw. 20 Gew.-%. Die Eigenschaften der Produkte sind in Tab. 2 aufgeführt.

*Tabelle 2*

| Versuch | V 1 | 4 | 5 |
|---|---|---|---|
| Esteranteil (Gew.-%) | 0 | 6 | 20 |
| rel. Visk. | 3,05 | 3,00 | 2,28 |
| Fliesslänge (cm) | 75 | 58 | 100 |
| Kerbschlagzähigkeit | | | |
| (kJ/m²) | 2,4 | 7,0 | 9,2 |
| Grenzbiegespannung | | | |
| (DIN 53452) (N/mm²) | 110 | 99,4 | 62,3 |
| Wasseraufnahme (%) | 10 | 7,5 | 3,8 |

*Beispiel 6*

Aus Caprolactam, Wasser und Polyester A wird ein Polyester-Polyamid analog Beispiel 1 hergestellt, wobei jedoch die Polyester-Zugabe nach Erreichen einer rel. Viskosität von 2,4 vorgenommen wird, nachdem 4 h bei 270°C polykondensiert wurde. Tab. 3 zeigt die Eigenschaften des Produktes.

*Tabelle 3*

| Beispiel | 6 | 7 |
|---|---|---|
| Esteranteil (Gew.-%) | 10 | 15 |
| rel. Visk. | 3,58 | 2,7 |
| Fliesslänge (cm) | 70 | 82 |
| Kerbschlagzähigkeit (kJ/m²) | 28,1 | 26,4 |
| Grenzbiegespannung (N/mm²) | 66,1 | — |
| Vicat B (°C) | 180 | — |

*Beispiel 7*

3,50 kg Azelainsäure und 2,68 kg wässrige Hexamethylendiaminlösung (82,5 Gew.-% Hexamethylendiamin) werden 1 Std. bei 200°C unter einem Stickstoffdruck von 2 bar gerührt. Danach wird entspannt und auf 270°C aufgeheizt und bis zu einen rel. Viskosität von 2,5 vorkondensiert. Anschliessend wird 1 kg Polyester nach Beispiel A hinzugefügt und 5 Std. weiter kondensiert. Die Eigenschaften des Polyesterpolyamids zeigt Tabelle 3.

**Patentansprüche**

1. Verfahren zur Herstellung von thermoplastisch verarbeitbaren Polyamid-Polyester Blockpolymeren, dadurch gekennzeichnet, dass man die polyamidbildenden Komponenten in bekannter Weise bis zu einer rel. Viskosität von mindestens 1,2 vorkondensiert, 1-30 Gew.-%, bezogen auf die Gesamtmischung, eines Polyesters mit einem Molekulargewicht Mn von 2000 bis 20000 zugibt, dessen Dicarbonsäureeinheiten sich zumindest zu 50 Gew.-% von wenigstens einer gegebenenfalls ungesättigten, aliphatischen oder cycloaliphatischen Dicarbonsäure mit wenigstens 17 C-Atomen ableiten, und in üblicher Weise bei Temperaturen von 250-270°C zu Ende polykondensiert.

2. Verfahren nach Anspruch 1, dadurch gekennzeichnet, dass der Polyester ein Molekulargewicht Mn von 3500 bis 15000 hat.

3. Verfahren nach Anspruch 1 oder 2, dadurch gekennzeichnet, dass sich die Dicarbonsäureeinheiten des Polyesters zu 80-100 Gew.-% von wenigstens einer gegebenenfalls ungesättigten aliphatischen oder cycloaliphatischen Dicarbonsäure mit wenigstens 17 C-Atomen ableiten.

4. Verfahren nach Ansprüchen 1 bis 3, dadurch gekennzeichnet, dass als Dicarbonsäuren des Polyesters Umsetzungsprodukte von ungesättigten Fettsäuren mit weiteren Fettsäuren oder Fettsäureestern, mit CO oder kurzkettigen α,β-ungesättigten Monocarbonsäuren oder die entsprechenden Hydrierungsprodukte eingesetzt werden.

5. Verfahren nach Ansprüchen 1 bis 4, dadurch gekennzeichnet, dass 5-20 Gew.-% eines Polyesters zugesetzt werden.

6. Verfahren nach Anspruch 4, dadurch gekennzeichnet, dass als Umsetzungsprodukte solche der allgemeinen Formel II

$CH_3-(CH_2)_x-CH-(CH_2)_y-COOH$ (II)
|
COOH

mit x und y unabhängig voneinander eine ganze Zahl von 1-15 und x+y zusammen 16 oder der allgemeinen Formel

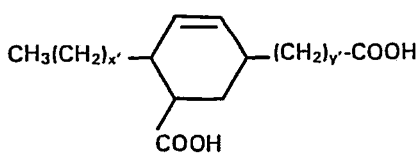
(III)

mit x' eine ganze Zahl von 1-5 und
y' eine ganze Zahl von 1-7
oder die entsprechenden Hydrierungsprodukte verwendet werden.

7. Verfahren nach Ansprüchen 1-6, dadurch gekennzeichnet, dass die polyamidbildenden Komponenten bis zu einer relat. Viskosität von 1,8-2,2 vorpolymerisiert werden.

8. Verfahren nach Ansprüchen 1-7, dadurch gekennzeichnet, dass die Polyamidblöcke Polyamid-6 oder Polyamid-6,6 sind.

9. Polyamid-Polyesterblockcopolymere erhalten nach Verfahren gemäss Anspruch 1-8.

**Claims**

1. Process for the production of thermoplastically processible polyamide-polyester block polymers, characterised in that the polyamide-forming components are precondensed in a known manner to a relative viscosity of at least 1.2, 1-30% by weight, based on the total mixture, of a polyester which has a molecular weight Mn of 2,000 to 20,000 and at least 50% by weight of whose dicarboxylic acid units are derived from at least one optionally unsaturated, aliphatic or cycloaliphatic dicarboxylic acid with at least 17 C atoms, are added, and the polycondensation is completed in a customary manner at temperatures of 250-270°C.

2. Process according to Claim 1, characterised in that the polyester has a molecular weight Mn of 3,500 to 15,000.

3. Process according to Claim 1 or 2, characterised in that 80-100% by weight of the dicarboxylic acid units of the polyester are derived from at least one optionally unsaturated aliphatic or cycloaliphatic dicarboxylic acid with at least 17 C atoms.

4. Process according to Claims 1 to 3, characterised in that reaction products of unsaturated fatty acids with other fatty acids or fatty acid esters, with CO or short-chain α,β-unsaturated monocarboxylic acids or the corresponding hydrogenation products are used as the dicarboxylic acids of the polyester.

5. Process according to Claims 1 to 4, characterised in that 5-20% by weight of a polyester are added.

6. Process according to Claim 4, characterised in that the reaction products used are those of the general formula II

$CH_3-(CH_2)_x-CH-(CH_2)_y-COOH$ (II)
|
COOH

with x and y independently of one another being an integer from 1-15 and x+y together being 16 or of the general formula

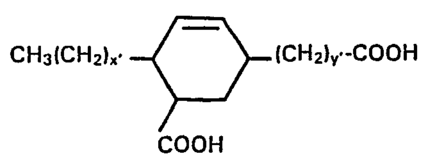
(III)

with x' being an integer from 1-5 and
y' being an integer from 1-7,
or the corresponding hydrogenation products.

7. Process according to Claims 1-6, characterised in that the polyamide-forming components are prepolymerised to a relative viscosity of 1.8-2.2.

8. Process according to Claims 1-7, characterised in that the polyamide blocks are polyamide-6 or polyamide-6,6.

9. Polyamide-polyester block copolymers obtained by processes according to Claim 1-8.

**Revendications**

1. Procédé pour fabriquer des polymères séquencés polyamide-polyester, pouvant être transformés par des processus thermoplastiques, procédé caractérisé en ce qu'on soumet de façon connue des composants formateurs de polyamide à une précondensation jusqu'à une viscosité relative au moins égale à 1,2, on ajoute 1 à 30% en poids, par rapport au mélange total, d'un polyester ayant un poids moléculaire $\overline{M}_n$ allant de 2000 à 20000, dont les motifs acide dicarboxylique consistent pour 50% en poids au moins, en au moins un acide dicarboxylique aliphatique ou cycloaliphatique, éventuellement insaturé, ayant au moins 17 atomes de carbone, et l'on effectue de façon usuelle la polycondensation jusqu'à son terme à des températures de 250 à 270°C.

2. Procédé selon la revendication 1, caractérisé en ce que le polyester possède un poids moléculaire $\overline{M}_n$ allant de 3500 à 15000.

3. Procédé selon la revendication 1 ou 2, caractérisé en ce que les motifs acide dicarboxylique du polyester dérivent pour 80 à 100% en poids d'au moins un acide dicarboxylique aliphatique ou cycloaliphatique, éventuellement insaturé, comportant au moins 17 atomes de carbone.

4. Procédé selon les revendications 1 à 3, caractérisé en ce qu'on utilise, comme acides dicarboxyliques du polyester, des produits de réaction d'acides gras insaturés avec d'autres acides gras ou des esters d'acides gras, avec CO ou avec des acides monocarboxyliques à insaturation en α,β à courte chaîne ou avec les produits d'hydrogénation correspondants.

5. Procédé selon les revendications 1 à 4, caractérisé en ce que l'on ajoute 5 à 20% en poids d'un polyester.

6. Procédé selon la revendication 4, caractérisé en ce qu'on utilise comme produit de réaction ceux répondant à la formule générale II:

$CH_3-(CH_2)_x-CH-(CH_2)_y-COOH$ (II)
|
COOH

dans laquelle x et y représentent, indépendamment l'un de l'autre, un nombre entier valant 1 à 5 et la somme x+y vaut 16, ou les produits de formule générale:

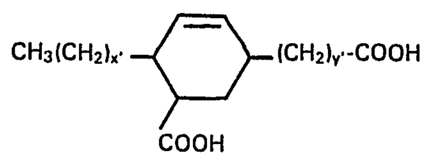 (III)

dans laquelle x' est un nombre entier valant 1 à 5 et y' est un nombre entier valant 1 à 7 ou les produits d'hydrogénation correspondants.

7. Procédé selon les revendications 1 à 6, caractérisé en ce qu'on soumet les composants formateurs de polyamide à une polymérisation préliminaire jusqu'à une viscosité relative valant de 1,8 à 2,2.

8. Procédé selon les revendications 1 à 7, caractérisé en ce que les séquences de polyamide sont du polyamide 6 ou du polyamide 6,6.

9. Copolymères à séquence polyamide-polyester, obtenus par un procédé selon l'une des revendications 1 à 8.